# EUROPÄISCHE PATENTSCHRIFT

(11) **EP 2 158 055 B1**
(45) Veröffentlichungstag und Bekanntmachung des Hinweises auf die Patenterteilung: **06.06.2018**
(21) Anmeldenummer: 08761233.9
(22) Anmeldetag: 19.06.2008
(51) Int. Cl.: B23D 53/00, B23D 55/04

(54) **SÄGEVORRICHTUNG UND VERFAHREN ZUR SÄGENDEN BEARBEITUNG EINES WERKSTÜCKS**
SAW DEVICE AND METHOD FOR SAWING A WORKPIECE
DISPOSITIF DE SCIAGE ET PROCÉDÉ D'USINAGE PAR SCIAGE D'UNE PIÈCE À USINER

(30) Priorität: 19.06.2007 DE 102007029292
(43) Veröffentlichungstag der Anmeldung: 03.03.2010
(73) Patentinhaber: Behringer GmbH, 74912 Kirchardt (DE)
(72) Erfinder: BEHRINGER, Christian, 74912 Kirchardt (DE)
(74) Vertreter: Hoeger, Stellrecht & Partner Patentanwälte mbB
(86) Internationale Anmeldenummer: PCT/EP2008/057807
(87) Internationale Veröffentlichungsnummer: WO 2008/155392

(56) Entgegenhaltungen:
- WO-A-03/092943
- DE-A1- 19 756 622
- FR-A1- 2 216 073
- US-A1- 2005 155 475

## Beschreibung

Die Erfindung betrifft eine Sägevorrichtung gemäß dem Oberbegriff des Anspruchs 1, mit einer Vorschubachse für ein sägend zu bearbeitendes Werkstück, mit einer ersten Sägeeinheit für eine sägende Bearbeitung des Werkstücks in einer sich quer zu der Vorschubachse erstreckenden ersten Sägeebene und mit einer zweiten Sägeeinheit für eine sägende Bearbeitung des Werkstücks in einer sich quer zu der Vorschubachse erstreckenden zweiten Sägeebene, mit einem zwischen den Sägeebenen angeordneten mittleren Vorrichtungsbereich, mit einem in einer Vorschubrichtung gesehen vor der ersten Sägeebene angeordneten vorderen Vorrichtungsbereich und mit einem in der Vorschubrichtung gesehen hinter der zweiten Sägeebene angeordneten hinteren Vorrichtungsbereich, wobei die Sägevorrichtung mindestens zwei in unterschiedlichen Vorrichtungsbereichen angeordnete Transporteinrichtungen zum Transport unterschiedlicher Werkstückabschnitte entlang der Vorschubachse umfasst, mit einer in dem vorderen Vorrichtungsbereich angeordneten ersten Transporteinrichtung. Die Erfindung betrifft auch ein Verfahren gemäß dem Oberbegriff des Anspruchs 14.

Eine solche Vorrichtung und ein solches Verfahren sind aus DE19756622A1 bekannt.

Aus der US 2005/0155475 A1 ist eine Säge zur Bearbeitung eines Werkstücks bekannt, wobei das Werkstück auf einem Band befördert wird. Diese Säge umfasst einen ersten Sägekopf und einen zweiten Sägekopf, welche jeweils auf einer Sägebank montiert sind.

Aus der EP 1 277 536 A2 ist eine horizontale Bandsägemaschine bekannt, welche einen vertikal aufsteigenden und absteigenden Sägekopf aufweist. Bei einem mit dieser Sägemaschine durchführbaren Verfahren zur Trennung von abgetrennten Teilen einer Metallstange wird die Bewegung des Sägekopfs in einem Abwärtshub fortgesetzt, bis ein Bandsägenblatt in einer unteren Aufnahme aufgenommen ist, wobei die Metallstange sich sukzessive in einer Vorwärtsrichtung bewegt, abgetrennte Werkstücke schiebt und sich dann in die Gegenrichtung bewegt und dabei einen Freiraum zwischen der Metallstange und den Werkstücken für einen Aufwärts-Rückhub bereitstellt.

In der DE 197 56 622 A1 ist eine Doppelprofilschnittmaschine mit Längsverschiebung der Profile offenbart, welche aus zwei unabhängigen Einheiten von Rädern und für den Transport besteht, die eine nach der anderen angeordnet sind, für die Längsverschiebung der zu schneidenden Profile, wobei in Wechselwirkung mit der hinteren Einheit der Räder zwei oder mehr Schnittköpfe angeordnet sind, von denen jeder ein Kreissägenblatt aufnimmt, das quer zur Verschiebung der Profile entlang der Maschine verschiebbar ist, während jeder Kopf einzeln in seine Lage bewegbar ist, in der sich die genaue Position für jenen Schnitt befindet, der durchgeführt werden muss.

Aus der WO 03/092943 A1 ist eine Werkzeugmaschine bekannt, welche Transportmittel für ein zu bearbeitendes Objekt umfasst und mindestens ein Bearbeitungsmittel. Es ist mindestens ein Bearbeitungsband vorgesehen, mit dem ein Objekt zu dem Bearbeitungsmittel transportiert wird, und es ist mindestens ein Transferband vorgesehen, mit welchem das Objekt zu dem Bearbeitungsband befördert wird.

Aus der FR 2 216 073 ist eine Schneidemaschine für Holzbalken bekannt.

Der vorliegenden Erfindung liegt die Aufgabe zugrunde, eine Sägevorrichtung der eingangs genannten Art so zu verbessern, dass die Schnittleistung weiter erhöht werden kann.

Diese Aufgabe wird bei einer Sägevorrichtung der eingangs genannten Art erfindungsgemäß dadurch gelöst, dass die erste Transporteinrichtung in einer zu der Vorschubachse parallelen Richtung bewegbar ist.

Die erfindungsgemäße Sägevorrichtung ermöglicht einen einfachen Transport unterschiedlicher Werkstückabschnitte des Werkstücks. Diese Werkstückabschnitte entstehen durch die sägende Bearbeitung des Werkstücks in den zwei Sägeebenen.

Mit Hilfe der Transporteinrichtungen können zumindest zwei Werkstückabschnitte voneinander unabhängig entlang der Vorschubachse transportiert werden. Dies ermöglicht es, die durch sägende Bearbeitung des Werkstücks entstandene Schnittfläche eines Werkstückabschnitts aus einer Sägeebene zu entfernen, um es von einem in dieser Sägeebene wirkenden Sägewerkzeug einer Sägeeinheit zu beabstanden. Hierdurch wird das Sägewerkzeug freigelegt, so dass es nach Abschluss eines Sägevorgangs ohne verschleißintensiven Kontakt mit anliegenden Schnittflächen der Werkstückabschnitte innerhalb der Sägeebene bewegt werden und in eine Ruhelage zurückkehren kann. Hierdurch kann die Betriebszeit des Sägewerkzeugs einer Sägeeinheit verlängert und die Schnittleistung der Sägevorrichtung erhöht werden.

Die erfindungsgemäße Sägevorrichtung eignet sich besonders gut zur Erzeugung sehr großflächiger Sägeschnitte.

Die Sägevorrichtung umfasst eine in dem vorderen Vorrichtungsbereich angeordnete erste Transporteinrichtung. Dies ermöglicht den Transport eines für eine sägende Bearbeitung vorgesehenen Werkstücks und/oder den Transport eines in dem vorderen Vorrichtungsbereich angeordneten ersten Werkstückabschnitts.

Die erste Transporteinrichtung ist in einer zu der Vorschubachse parallelen Richtung bewegbar. Hierdurch kann das Werkstück oder der erste Werkstückabschnitt bewegt werden, indem die Transporteinrichtung das Werkstück oder den ersten Werkstückabschnitt erfasst und anschließend eine aus der ersten Transporteinrichtung und dem Werkstück oder eine aus der ersten Transporteinrichtung und dem ersten Werkstückabschnitt gebildete Einheit in zu der Vorschubachse parallelen Richtung bewegt wird. Hierdurch wird ein zuverlässiger und schneller Transport des Werkstücks oder des ersten Werkstückabschnitts ermöglicht.

In vorteilhafter Weise ist oder sind die erste Sägeebene und/oder die zweite Sägeebene senkrecht oder im Wesentlichen senkrecht zu der Vorschubachse. Hierdurch können die Sägeschnittflächen minimiert werden.

Günstig ist es, wenn die Vorschubachse in einer bezogen auf die Schwerkraftrichtung horizontalen Richtung verläuft. Dies erleichtert einen voneinander unabhängigen Transport einzelner Werkstückabschnitte.

Bevorzugt ist es ferner, wenn die erste Sägeebene und/oder die zweite Sägeebene in einer bezogen auf die Schwerkraftrichtung vertikalen Richtung verläuft oder verlaufen. Dies ermöglicht eine einfache Führung der in den Sägeebenen wirkenden Sägewerkzeuge.

Besonders vorteilhaft ist es, wenn der Abstand zwischen der ersten Sägeebene und der zweiten Sägeebene einstellbar ist. Dies ermöglicht die Einstellung einer Länge eines durch sägende Bearbeitung des Werkstücks herzustellenden Werkstückabschnitts.

Nach einer vorteilhaften Ausführungsform der Erfindung ist die erste Sägeeinheit in einer zu der Vorschubachse parallelen Richtung bewegbar. Dies ermöglicht eine Positionierung der ersten Sägeebene relativ zu der zweiten Sägeebene. Die Bewegbarkeit der ersten Sägeeinheit hat den weiteren Vorteil, dass ein besonders einfaches Freilegen eines Sägewerkzeugs von Schnittflächen der durch sägende Bearbeitung des Werkstücks entstandenen Werkstückabschnitte möglich ist. Dies wird nachstehend unter Bezugnahme auf ein erfindungsgemäßes Verfahren zur sägenden Bearbeitung eines Werkstücks detaillierter erläutert.

Besonders vorteilhaft ist es, wenn die Sägevorrichtung einen ersten Sägeeinheitsantrieb für eine Bewegung der ersten Sägeeinheit in einer zu der Vorschubachse parallelen Richtung umfasst. Dies ermöglicht eine Automatisierung der Bewegung der ersten Sägeeinheit.

Bevorzugt ist es ferner, wenn die Sägevorrichtung eine erste Führungseinrichtung zur Führung einer Bewegung der ersten Sägeeinheit umfasst. Dies erleichtert eine exakte Positionierung der ersten Sägeeinheit.

Nach einer vorteilhaften Ausführungsform der Erfindung ist die erste Sägeeinheit in einer zu der Vorschubachse parallelen Richtung bewegbar und steht die zweite Sägeeinheit relativ zu der Vorschubachse fest. Dies ermöglicht es, die zweite Sägeebene als Referenzebene für den Abstand der Sägeebenen zueinander zu verwenden.

Nach einer weiteren vorteilhaften Ausführungsform der Erfindung ist vorgesehen, dass die zweite Sägeeinheit in einer zu der Vorschubachse parallelen Richtung bewegbar ist. Hierdurch kann ein Abstand der zweiten Sägeebene zu der ersten Sägeebene eingestellt werden. Außerdem kann das Freilegen eines Sägewerkzeugs, das mit zueinander benachbarten Werkstückabschnitten in Kontakt steht, erleichtert werden, wie dies nachfolgend unter Bezugnahme auf die Beschreibung eines erfindungsgemäßen Verfahrens zur sägenden Bearbeitung eines Werkstücks beschrieben ist.

Bei einer Sägevorrichtung mit einer bewegbaren zweiten Sägeeinheit ist es möglich, dass die erste Sägeeinheit ebenfalls in zu der Vorschubachse paralleler Richtung bewegbar ist oder dass die erste Sägeeinheit feststeht.

In vorteilhafter Weise umfasst die Sägevorrichtung einen zweiten Sägeeinheitsantrieb für eine Bewegung der zweiten Sägeeinheit in einer zu der Vorschubachse parallelen Richtung. Hierdurch lässt sich eine Bewegung der zweiten Sägeeinheit automatisieren.

Vorzugsweise umfasst die Sägevorrichtung eine zweite Führungseinrichtung zur Führung einer Bewegung der zweiten Sägeeinheit. Dies erleichtert die exakte Positionierung der zweiten Sägeeinheit.

Für eine Automatisierung des Transports des Werkstücks oder des ersten Werkstückabschnitts ist es vorteilhaft, wenn die Sägevorrichtung einen ersten Transporteinrichtungsantrieb für eine Bewegung der ersten Transporteinrichtung in einer zu der Vorschubachse parallelen Richtung aufweist.

Günstig ist es ferner, wenn die Sägevorrichtung eine erste Transporteinrichtungsführung zur Führung einer Bewegung der ersten Transporteinrichtung umfasst. Dies erleichtert eine exakte Positionierung des Werkstücks oder des ersten Werkstückabschnitts.

Nach einer besonders vorteilhaften Ausführungsform der Erfindung sind die erste Transporteinrichtung und die erste Sägeeinheit entlang der Vorschubachse gesehen in einer Relativlage anordenbar, in der sich die erste Transporteinrichtung und die erste Sägeeinheit zumindest abschnittsweise überdecken. Auf diese Weise kann die erste Transporteinrichtung in eine unmittelbare Nähe zu der ersten Sägeebene gebracht werden, so dass in der ersten Sägeebene ein sehr exakter Sägeschnitt erzeugt werden kann. Darüber hinaus ermöglicht eine zumindest abschnittsweise Überdeckung der ersten Transporteinrichtung und der ersten Sägeeinheit eine Platz sparende Anordnung dieser Vorrichtungsteile. Dies reduziert den Raumbedarf der Sägevorrichtung nicht nur während des Betriebs der Sägevorrichtung, sondern auch, wenn die Sägevorrichtung stillsteht. Der auf diese Weise eingesparte Raum steht dann beispielsweise für benachbarte Werkzeugmaschinen zur Verfügung.

Besonders vorteilhaft ist es, wenn die erste Sägeeinheit einen sich quer zu der Vorschubachse erstreckenden Freiraum begrenzt, in welchem zumindest ein Abschnitt der ersten Transporteinrichtung anordenbar ist. Dies ermöglicht es, die erste Transporteinrichtung zumindest abschnittsweise in den von der ersten Sägeeinheit begrenzten Freiraum hinein zu bewegen, so dass eine Platz sparende Anordnung geschaffen werden kann.

In vorteilhafter Weise umfasst die Sägevorrichtung eine in dem mittleren Vorrichtungsbereich angeordnete zweite Transporteinrichtung. Diese ermöglicht einen einfachen Transport eines in dem mittleren Vorrichtungsbereich angeordneten zweiten Werkstückabschnitts.

Vorzugsweise ist die zweite Transporteinrichtung in einer zu der Vorschubachse parallelen Richtung bewegbar. Dies ermöglicht es, einen in dem mittleren Vorrichtungsbereich angeordneten zweiten Werkstückabschnitt zu erfassen und die zweite Transporteinrichtung gemeinsam mit dem erfassten zweiten Werkstückabschnitt zu bewegen.

Für eine automatisierte Bewegung der zweiten Transporteinrichtung in einer zu der Vorschubachse parallelen Richtung ist es vorteilhaft, wenn die Sägevorrichtung einen zweiten Transporteinrichtungsantrieb umfasst.

Bevorzugt ist es ferner, wenn die Sägevorrichtung eine zweite Transporteinrichtungsführung zur Führung einer Bewegung der zweiten Transporteinrichtung umfasst. Dies erleichtert die exakte Positionierung der zweiten Transporteinrichtung und somit eines zweiten Werkstückabschnitts.

Vorteilhaft ist es ferner, wenn die zweite Transporteinrichtung und die erste Sägeeinheit und/oder wenn die zweite Transporteinrichtung und die zweite Sägeeinheit entlang der Vorschubachse gesehen in einer Relativlage anordenbar sind, in der sich die zweite Transporteinrichtung und die erste Sägeeinheit und/oder in der sich die zweite Transporteinrichtung und die zweite Sägeeinheit zumindest abschnittsweise überdecken. Dies ermöglicht eine sehr kompakte Anordnung der Sägeeinheiten und der zweiten Transporteinrichtung, insbesondere wenn die Sägeeinheiten in räumlicher Nähe zueinander angeordnet sind. Diese räumliche Nähe ermöglicht während des Betriebs der Sägevorrichtung die Herstellung sehr kurzer Werkstückabschnitte und während eines Stillstands der Sägevorrichtung einen besonders kompakten Gesamtaufbau.

Nach einer vorteilhaften Ausführungsform der Erfindung begrenzt die erste Sägeeinheit einen sich quer zu der Vorschubachse erstreckenden Freiraum und/oder begrenzt die zweite Sägeeinheit einen sich quer zu der Vorschubachse erstreckenden Freiraum, in welchem und/oder in welchen zumindest ein Abschnitt der zweiten Transporteinrichtung anordenbar ist. Hierdurch können die erste Sägeeinheit und die zweite Transporteinrichtung und/oder die zweite Sägeeinheit und die zweite Transporteinrichtung so angeordnet werden, dass die Sägevorrichtung nur wenig Bauraum beansprucht.

In vorteilhafter Weise umfasst die Sägevorrichtung eine in dem hinteren Vorrichtungsbereich angeordnete dritte Transporteinrichtung. Dies ermöglicht einen Transport eines in dem hinteren Vorrichtungsbereich angeordneten dritten Werkstückabschnitts.

In vorteilhafter Weise ist die dritte Transporteinrichtung in einer zu der Vorschubachse parallelen Richtung bewegbar. Hierdurch kann die Schnittfläche eines dritten Werkstückabschnitts aus der zweiten Sägeebene heraus bewegt werden, so dass ein Sägewerkzeug der zweiten Sägeeinheit freilegbar ist.

Für eine Automatisierung einer Bewegung der dritten Transporteinrichtung in einer zu der Vorschubachse parallelen Richtung ist es bevorzugt, wenn die Sägevorrichtung einen dritten Transporteinrichtungsantrieb umfasst.

Günstig ist es, wenn die Sägevorrichtung eine dritte Transporteinrichtungsführung zur Führung einer Bewegung der dritten Transporteinrichtung umfasst, so dass die dritte Transporteinrichtung genau positionierbar ist.

Vorteilhaft ist es ferner, wenn die dritte Transporteinrichtung und die zweite Sägeeinheit entlang der Vorschubachse gesehen in einer Relativlage anordenbar sind, in der sich die dritte Transporteinrichtung und die zweite Sägeeinheit zumindest abschnittsweise überdecken. Dies ermöglicht eine Raum sparende Anordnung der dritten Transporteinrichtung und der zweiten Sägeeinheit.

Nach einer vorteilhaften Ausführungsform der Erfindung ist vorgesehen, dass die zweite Sägeeinheit einen sich quer zu der Vorschubachse erstreckenden Freiraum begrenzt, in welchem zumindest ein Abschnitt der dritten Transporteinrichtung anordenbar ist. Auch dies ermöglicht einen kompakten Aufbau der Sägevorrichtung.

Besonders vorteilhaft ist es, wenn die Sägevorrichtung eine Führungseinrichtung zur Führung einer Bewegung der ersten Sägeeinheit und zur Führung einer Bewegung der zweiten Sägeeinheit umfasst. Eine solche Führungseinrichtung ermöglicht die Führung beider Sägeeinheiten, so dass eine genaue Positionierung der Sägeeinheiten relativ zueinander erleichtert wird.

Bevorzugt ist es ferner, wenn die Sägevorrichtung eine Transporteinrichtungsführung zur Führung einer Bewegung der mindestens zwei Transporteinrichtungen umfasst. Dies erleichtert eine exakte Positionierung von mindestens zwei Transporteinrichtungen relativ zueinander. Mit Hilfe einer Transporteinrichtungsführung zur Führung einer Bewegung mehrerer Transporteinrichtungen kann außerdem die Bauteilzahl der Sägevorrichtung reduziert werden.

Besonders vorteilhaft ist es, wenn die Sägevorrichtung eine Führungseinrichtung zur Führung einer Bewegung mindestens einer Sägeeinheit und eine Transporteinrichtungsführung zur Führung einer Bewegung mindestens einer Transporteinrichtung umfasst und die Führungseinrichtung und die Transporteinrichtungsführung derart zueinander versetzt angeordnet sind, dass sie zu der Vorschubachse unterschiedlich beabstandet sind. Hierdurch kann ein für eine Sägeeinheit und für eine Transporteinrichtung benötigter Bewegungsraum vergrößert werden, so dass die Sägevorrichtung für die Herstellung sehr kurzer und auch vergleichsweise langer Werkstückabschnitte geeignet ist. Außerdem ermöglicht es der Versatz der Führungseinrichtung und der Transporteinrichtungsführung, dass zumindest eine Sägeeinheit und zumindest eine Transporteinrichtung so angeordnet werden können, dass sie gemeinsam nur wenig Bauraum beanspruchen.

In vorteilhafter Weise ist oder sind die erste Sägeeinheit und/oder die zweite Sägeeinheit zur sägenden Bearbeitung metallischer Werkstoffe ausgebildet.

Besonders bevorzugt ist es, wenn die erste Sägeeinheit und/oder die zweite Sägeeinheit eine Bandsägeeinheit ist oder sind. Eine Bandsägeeinheit hat den Vorteil, dass der von einem Sägeband in einem Werkstück erzeugte Schnittkanal vergleichsweise schmal ist. Hierdurch wird das Zerspanvolumen und somit der durch die sägende Bearbeitung des Werkstücks bedingte Materialausschuss reduziert. Außerdem kann das Sägeband mit vergleichsweise geringen Antriebsleistungen angetrieben werden.

In vorteilhafter Weise umfasst die Bandsägeeinheit einen Sägerahmen. Dies ermöglicht einen sehr steifen und robusten Aufbau einer Sägeeinheit.

In vorteilhafter Weise ist der Sägerahmen in einer bezogen auf die Schwerkraftrichtung vertikalen Richtung bewegbar. Dies ermöglicht eine Vorgabe einer Sägeebene mit einem bezogen auf die Schwerkraftrichtung vertikalen Verlauf.

Günstig ist es, wenn die Bandsägeeinheit eine Sägeband-Führungseinrichtung umfasst. Dies ermöglicht eine exakte Führung des Sägebands der Bandsägeeinheit.

Bevorzugt ist es, wenn sich die Sägeband-Führungseinrichtung einer Sägeeinheit in einer Ebene erstreckt, die winklig zu der dieser Sägeeinheit zugeordneten Sägeebene verläuft. Dies ermöglicht einen kompakten Aufbau der Sägeeinheit und eine schonende Führung eines Sägebands.

Besonders bevorzugt ist es, wenn eine Sägeband-Führungseinrichtung der ersten Sägeeinheit und eine Sägeband-Führungseinrichtung der zweiten Sägeeinheit auf einander abgewandten Seiten der Sägeeinheiten angeordnet sind. Dies ermöglicht es, den Abstand zwischen den Sägeebenen so weit zu reduzieren, dass auch sehr kurze Werkstückabschnitte herstellbar sind.

Nach einer Ausführungsform der Erfindung umfasst die Sägevorrichtung ein Maschinengestell, an welchem die erste Sägeeinheit und/oder die zweite Sägeeinheit angeordnet ist oder sind. Hierdurch erhöht sich die Stabilität der Sägevorrichtung.

Besonders bevorzugt ist es, wenn die Sägevorrichtung eine Steuereinrichtung zur Koordination einer Bewegung mindestens einer Sägeeinheit und mindestens einer Transporteinrichtung umfasst. Die Steuereinrichtung ermöglicht einen effizienten und störungsfreien Betrieb der Sägevorrichtung.

Günstig ist es, wenn ein Sägewerkzeug der ersten Sägeeinheit und/oder ein Sägewerkzeug der zweiten Sägeeinheit nach Abschluss eines Sägevorgangs freilegbar sind. Dadurch ist eine ungehinderte "Herausbewegung" des jeweiligen Sägewerkzeugs möglich.

Es ist ferner günstig, wenn ein Werkstück gleichzeitig mit der ersten Sägeeinheit und der zweiten Sägeeinheit bearbeitbar ist. Dadurch ergibt sich eine effektive Bearbeitbarkeit unter Minimierung des Zeitaufwands zum Sägen von Werkstücken.

Die Erfindung betrifft ferner ein Verfahren zur sägenden Bearbeitung eines Werkstücks gemäß dem Anspruch 14. Der Erfindung liegt die weitere Aufgabe zugrunde, ein Verfahren zur sägenden Bearbeitung eines Werkstücks zu schaffen, mit dem eine hohe Schnittleistung erzeugt werden kann.

Diese Aufgabe wird bei einem Verfahren zur sägenden Bearbeitung eines Werkstücks dadurch gelöst, dass ein Werkstück relativ zu einer Sägevorrichtung positioniert wird, indem es in einer Vorschubrichtung entlang einer Vorschubachse der Sägevorrichtung bewegt wird, so dass das Werkstück eine sich quer zu der Vorschubachse erstreckende erste Sägeebene und eine sich quer zu der Vorschubachse erstreckende zweite Sägeebene durchsetzt, dass das Werkstück in drei Werkstückabschnitte zerteilt wird, indem eine der ersten Sägeebene zugeordnete erste Sägeeinheit und indem eine der zweiten Sägeebene zugeordnete zweite Sägeeinheit jeweils aus einer Ruhelage, in welcher die Sägeeinheiten außer Eingriff mit dem Werkstück stehen, in eine Arbeitslage, in welcher die Sägeeinheiten in Eingriff mit dem Werkstück stehen, überführt werden, dass mindestens zwei der drei Werkstückabschnitte voneinander unabhängig entlang der Vorschubachse bewegt werden, dass die erste Sägeeinheit und/oder die zweite Sägeeinheit in zu der Vorschubachse paralleler Richtung bewegt wird, bevor mindestens eine der Sägeeinheiten aus ihrer Arbeitslage in ihre Ruhelage überführt wird.

Die Bewegung von mindestens zwei der drei Werkstückabschnitte ermöglicht es, die Schnittflächen dieser Werkstückabschnitte außer Eingriff mit einem Sägewerkzeug zu bringen. Hierdurch liegt das Sägewerkzeug einer Sägeeinheit frei, wenn diese Sägeeinheit aus ihrer Arbeitslage in ihre Ruhelage überführt wird. Hierdurch kann ein reibintensiver Kontakt des Sägewerkzeugs mit einer mit Hilfe dieses Sägewerkzeugs erzeugten Schnittfläche eines Werkstückabschnitts vermieden werden. Dies erhöht die Standzeit des Sägewerkzeugs und die Schnittleistung der Sägevorrichtung.

Nach einer vorteilhaften Ausführungsform der Erfindung ist vorgesehen, dass zur Positionierung des Werkstücks relativ zu der Sägevorrichtung das Werkstück um das Doppelte eines Abstands zwischen der ersten Sägeebene und der zweiten Sägeebene entlang der Vorschubachse bewegt wird. Dies ermöglicht es, mit nur einem Positioniervorgang die Herstellung von identisch langen Werkstückabschnitten einzuleiten. Es ist auch möglich, dass das Werkstück um einen Betrag entlang der Vorschubachse bewegt wird, der von dem Doppelten des Abstands zwischen der ersten Sägeebene und der zweiten Sägeebene abweicht. Hierdurch kann die Herstellung unterschiedlich langer Werkstückabschnitte eingeleitet werden.

Bevorzugt ist es, wenn ein in Vorschubrichtung gesehen vor der ersten Sägeebene angeordneter erster Werkstückabschnitt in zu der Vorschubrichtung entgegengesetzter Richtung um einen ersten Rückhubbetrag bewegt wird. Hierdurch kann eine Schnittfläche des ersten Werkstückabschnitts von einem Sägewerkzeug der ersten Sägeeinheit beabstandet werden.

Bevorzugt ist es ferner, wenn die erste Sägeeinheit in zu der Vorschubrichtung entgegengesetzter Richtung um einen zweiten Rückhubbetrag bewegt wird, der kleiner ist als der erste Rückhubbetrag. Dies ermöglicht es, das Sägewerkzeug der zweiten Sägeeinheit auch außer Eingriff mit einer dem ersten Werkstückabschnitt zugewandten Schnittfläche eines zweiten Werkstückabschnitts zu bringen. Da der zweite Rückhubbetrag kleiner ist als der vorstehend genannte erste Rückhubbetrag, kann das Sägewerkzeug der ersten Sägeeinheit sowohl außer Eingriff mit dem ersten Werkstückabschnitt als auch außer Eingriff mit dem zweiten Werkstückabschnitt gebracht werden.

Bevorzugt ist es ferner, wenn ein zwischen den Sägeebenen angeordneter zweiter Werkstückabschnitt in zu der Vorschubrichtung entgegengesetzter Richtung um einen dritten Rückhubbetrag bewegt wird, der kleiner ist als der zweite Rückhubbetrag. Dies hat den Vorteil, dass das Sägewerkzeug der ersten Sägeeinheit vollständig freigelegt bleibt und zusätzlich eine rückwärtige Schnittfläche des zweiten Werkstückabschnitts von einem Sägewerkzeug der zweiten Sägeeinheit beabstandet werden kann.

Ferner ist es bevorzugt, wenn ein in Vorschubrichtung gesehen hinter der zweiten Sägeebene angeordneter dritter Werkstückabschnitt in der Vorschubrichtung um einen Vorhubbetrag bewegt wird. Hierdurch kann auch eine Schnittfläche eines dritten Werkstückabschnitts von einem Sägewerkzeug der zweiten Sägeeinheit beabstandet werden.

Die vorstehend beschriebenen Verfahren eignen sich besonders gut für eine Sägevorrichtung, bei der die erste Sägeeinheit in einer zu der Vorschubachse parallelen Richtung bewegbar ist und bei der die zweite Sägeeinheit feststeht. Für eine Sägevorrichtung mit einer feststehenden ersten Sägeeinheit und einer bewegbaren zweiten Sägeeinheit können die vorstehend beschriebenen Verfahren in kinematischer Umkehr durchgeführt werden. Diese kinematische Umkehr ist Gegenstand der Unteransprüche 49 bis 52, mit denen die vorstehend beschriebenen Vorteile des vorstehend beschriebenen Verfahrens ebenfalls erreicht werden können.

Nach einer weiteren Ausführungsform der Erfindung ist vorgesehen, dass an eine Überführung der ersten Sägeeinheit und der zweiten Sägeeinheit in ihre Ruhelagen anschließend die Werkstückabschnitte in Vorschubrichtung bewegt werden, indem ein in Vorschubrichtung gesehen vor der ersten Sägeebene angeordneter erster Werkstückabschnitt in Vorschubrichtung bewegt wird und einen zwischen den Sägeebenen angeordneten zweiten Werkstückabschnitt unmittelbar und einen in Vorschubrichtung gesehen hinter der zweiten Sägeebene angeordneten dritten Werkstückabschnitt mittels des zweiten Werkstückabschnitts antreibt. Dies hat den Vorteil, dass für ein Ausschieben der durch sägende Bearbeitung eines Werkstücks hergestellten Werkstückabschnitte aus einer Sägevorrichtung lediglich eine Transporteinrichtung erforderlich ist, die den ersten Werkstückabschnitt antreibt. Der zweite Werkstückabschnitt und der dritte Werkstückabschnitt werden mit Hilfe des ersten Werkstückabschnitts aus der Sägevorrichtung heraus geschoben.

Bei einer Wiederholung eines vorstehend beschriebenen Verfahrens zur sägenden Bearbeitung eines Werkstücks ist es vorteilhaft, wenn der bei dem erstmaligen Durchlauf eines vorstehend beschriebenen Verfahrens hergestellte erste Werkstückabschnitt ein für einen folgenden Durchlauf eines vorstehend beschriebenen Verfahren zu bearbeitendes Werkstück bildet, das in drei Werkstückabschnitte zerteilbar ist.

Die Erfindung betrifft ferner die Verwendung einer vorstehend beschriebenen Vorrichtung zur Durchführung eines vorstehend beschriebenen Verfahrens.

Weitere Merkmale und Vorteile der der Erfindung sind Gegenstand der nachfolgenden Beschreibung und der zeichnerischen Darstellung eines bevorzugten Ausführungsbeispiels.

In den Zeichnungen zeigen:
- Figur 1:: eine perspektivische Ansicht einer Ausführungsform einer erfindungsgemäßen Sägevorrichtung;
- Figur 2:: eine teilweise geschnittene perspektivische Ansicht der Sägevorrichtung aus Figur 1;
- Figur 3:: eine perspektivische Ansicht der Sägevorrichtung aus Figur 1 aus einer rückwärtigen Perspektive;
- Figur 4:: eine teilweise geschnittene perspektivische Ansicht der Sägevorrichtung aus Figur 1 aus einer rückwärtigen Perspektive; und
- Figuren 5a bis 5i:: schematische Seitenansichten der Sägevorrichtung aus Figur 1 in verschiedenen Phasen einer Ausführungsform eines erfindungsgemäßen Verfahrens zur sägenden Bearbeitung eines Werkstücks.

Gleiche oder funktional äquivalente Elemente sind in allen Figuren mit denselben Bezugszeichen bezeichnet.

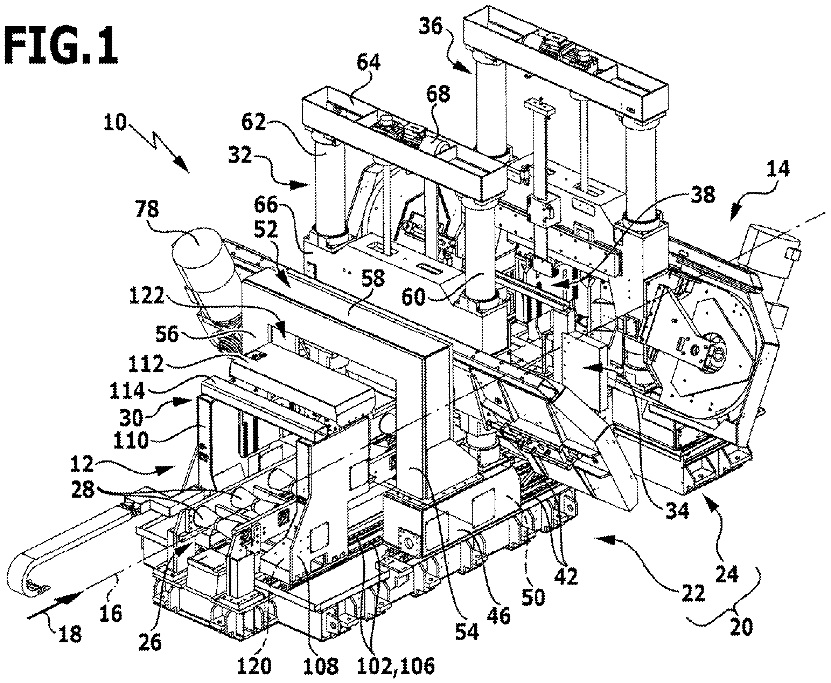

Eine Ausführungsform einer mit 10 bezeichneten Sägevorrichtung ist in den Figuren 1 bis 4 dargestellt. Die Sägevorrichtung 10 weist ein vorderes Ende 12 und ein hinteres Ende 14 auf. Zwischen dem vorderen Ende 12 und dem hinteren Ende 14 erstreckt sich eine Vorschubachse 16, entlang der ein in den Figuren 1 bis 4 nicht dargestelltes Werkstück in einer Vorschubrichtung 18 vom vorderen Ende 12 hin zum hinteren Ende 14 bewegt werden kann.

Die Sägevorrichtung 10 weist ein Maschinengestell 20 aus, mit dem die Sägevorrichtung 10 auf einer Aufstellfläche (ohne Bezugszeichen) aufgestellt werden kann. Das Maschinengestell 20 weist ein vorderes Gestellteil 22 und ein hinteres Gestellteil 24 auf.

Die Vorschubachse 16 erstreckt sich in einer bezogen auf die Schwerkraftrichtung horizontalen Richtung. Die Vorschubachse 16 ist durch eine Transportbahn 26 definiert, die sich zwischen dem vorderen Ende 12 und dem hinteren Ende 14 der Sägevorrichtung 10 erstreckt. Die Transportbahn 26 umfasst eine Vielzahl von Transportrollen 28, deren Achsen (ohne Bezugszeichen) senkrecht zu der Vorschubachse 16 und parallel zueinander verlaufen.

An dem vorderen Gestellteil 20 des Maschinengestells 20 ist eine insgesamt mit 30 bezeichnete erste Transporteinrichtung 30 angeordnet, mit der ein Werkstück oder Werkstückabschnitt erfasst und entlang der Vorschubachse 16 bewegt werden kann.

An dem vorderen Gestellteil 22 des Maschinengestells 20 ist eine insgesamt mit 32 bezeichnete Sägeeinheit angeordnet, die als Bandsägeeinheit ausgebildet ist.

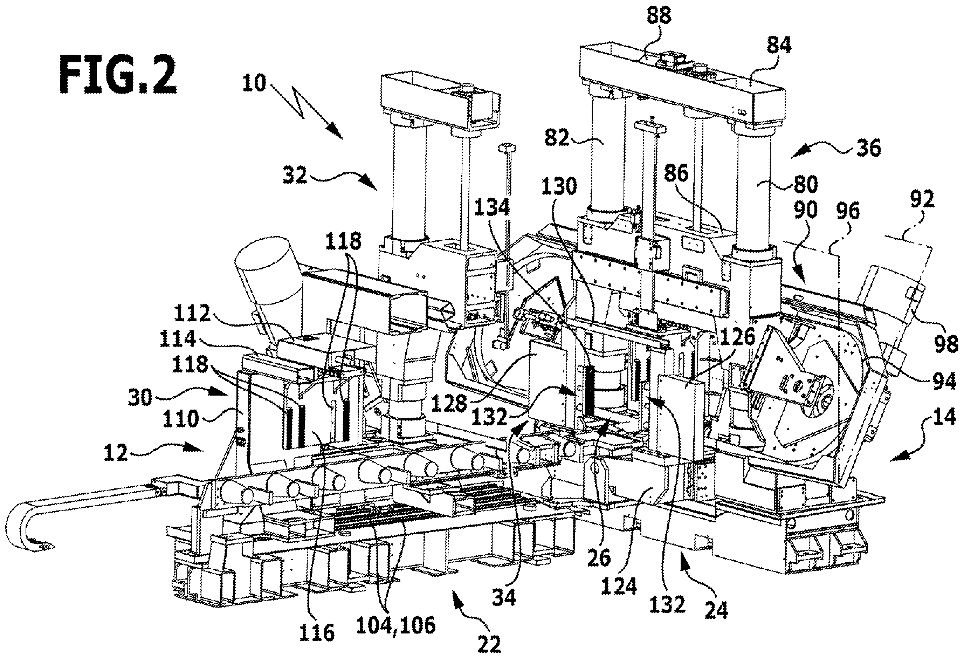

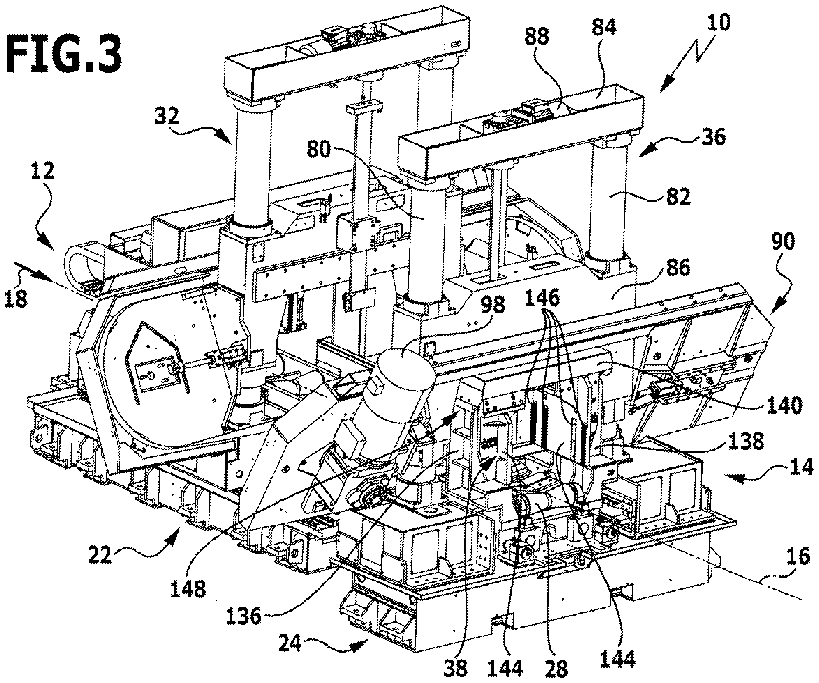

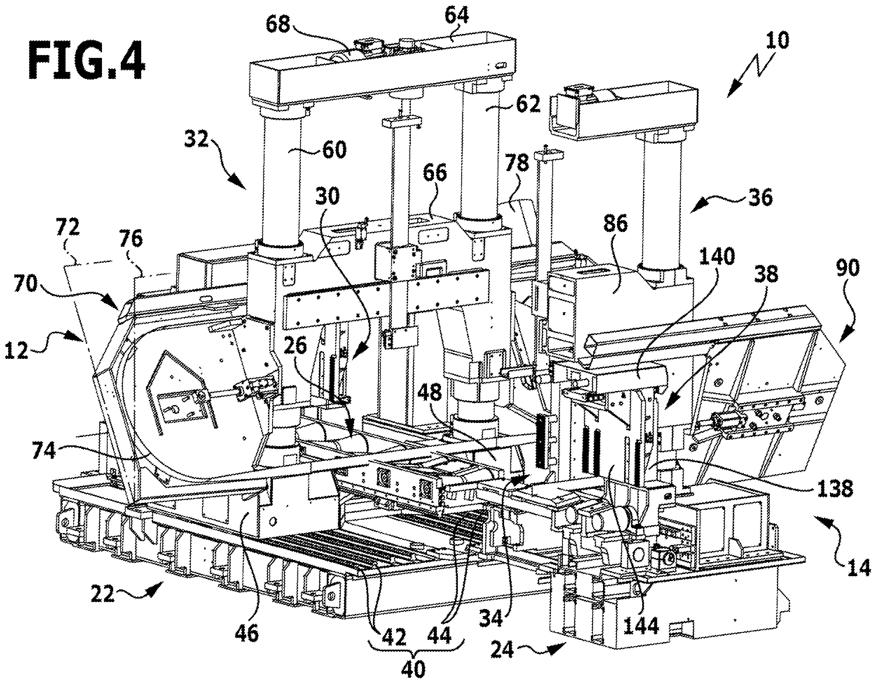

An dem hinteren Gestellteil 24 des Maschinengestells 20 ist eine zweite Transporteinrichtung 34 (siehe insbesondere Figur 2) zum Transport eines Werkstücks oder eines Werkstückabschnitts angeordnet. Ferner ist an dem hinteren Gestellteil 24 eine insgesamt mit 36 bezeichnete, als Bandsägeeinheit ausgebildete Sägeeinheit angeordnet. Schließlich ist an dem hinteren Gestellteil 24 des Maschinengestells 20 eine dritte Transporteinrichtung 38 (siehe Figuren 3 und 4) zum Transport eines Werkstücks oder eines Werkstückabschnitts entlang der Vorschubachse 16 angeordnet.

Die erste Sägeeinheit 32 ist beweglich an dem vorderen Gestellteil 22 angeordnet; die zweite Sägeeinheit 36 ist fest mit dem hinteren Gestellteil 24 verbunden.

Unter weiterer Bezugnahme auf Figur 1 und 4 wird im Folgenden die Lagerung der ersten Sägeeinheit 32 an dem vorderen Gestellteil 22 sowie der Aufbau der ersten Sägeeinheit 32 beschrieben.

An der Oberseite des vorderen Gestellteils 22 ist eine in Figur 4 insgesamt mit 40 bezeichnete erste Führungseinrichtung zur Führung der ersten Sägeeinheit 32 vorgesehen. Die erste Führungseinrichtung umfasst ein erstes Schienenpaar 42 sowie ein zweites Schienenpaar 44. Die Schienenpaare 42 und 44 verlaufen parallel zu der Vorschubachse 16 und sind bezogen auf eine in vertikaler Richtung entlang der Vorschubachse 16 verlaufenden Ebene beidseits dieser Ebene angeordnet.

Die erste Sägeeinheit 32 weist einen ersten Schlitten 46 auf, der entlang des Schienenpaars 42 verschieblich ist. Ferner weist die Sägeeinheit 32 einen zweiten Schlitten 48 (vgl. Figur 4) auf, der entlang des Schienenpaars 44 verschieblich ist.

Die erste Sägeeinheit 32 weist einen in dem Schlitten 46 und/oder in dem Schlitten 48 angeordneten Sägeeinheitsantrieb 50 auf.

Der Schlitten 46 und der Schlitten 48 sind über einen Versteifungsrahmen 52 miteinander verbunden. Der Versteifungsrahmen 52 weist ein mit dem Schlitten 46 verbundenes erstes Seitenteil 54 sowie ein mit dem Schlitten 48 verbundenes zweites Seitenteil 56 auf. Die Seitenteile 54 und 56 erstrecken sich in vertikaler Richtung und sind an ihrem oberen Ende mit Hilfe eines Rahmen-Oberteils 58 verbunden.

Die erste Sägeeinheit 32 weist zwei zylindrische, sich in vertikaler Richtung erstreckende Säulen 60 und 62 auf, die jeweils an ihrem unteren Ende mit einem der Schlitten 46, 48 verbunden sind. Die Säulen 60 und 62 sind an ihrem oberen Ende mit Hilfe eines Oberzugs 64 verbunden.

Die erste Sägeeinheit 32 umfasst einen Sägerahmen 66, der in vertikaler Richtung verschieblich an den Säulen 60 und 62 geführt ist. Der Sägerahmen 66 ist mit Hilfe eines an dem Oberzug 64 der ersten Sägeeinheit 32 angeordneten Sägerahmenantriebs 68 in vertikaler Richtung antreibbar.

Der Sägerahmen 66 ist fest mit einer insgesamt mit 70 bezeichneten Sägeband-Führungseinrichtung verbunden. Diese erstreckt sich in einer in Figur 4 mit 72 bezeichneten Ebene. Mit Hilfe der Sägeband-Führungseinrichtung 70 ist ein umfangsseitig geschlossenes Sägeband 74 geführt. Dieses verläuft mit seinem oberen Trum auf der dem vorderen Ende 12 der Sägevorrichtung 10 zugewandten Seite der Säulen 60 und 62. Mit seinem unteren Trum verläuft das Sägeband 74 auf der dem hinteren Ende 14 der Sägevorrichtung 10 zugewandten Seite der Säulen 60 und 62.

Der untere Trum des Sägebands 74 verläuft im Bereich der Transportbahn 26 innerhalb einer ersten Sägeebene 76. Die erste Sägeebene 76 ist quer und insbesondere senkrecht zu der Vorschubachse 16 angeordnet.

Die erste Sägeeinheit 32 umfasst ferner einen Sägeband-Antrieb 78, der auf der dem vorderen Ende 12 der Sägevorrichtung zugewandten Seite der ersten Sägeeinheit 32 angeordnet ist.

Der Aufbau der zweiten Sägeeinheit 36 wird im Folgenden unter Bezugnahme auf Figuren 2 und 3 beschrieben.

Die zweite Sägeeinheit 36 weist zwei sich in vertikaler Richtung erstreckende, zylindrische Säulen 80 und 82 auf. Die Säulen 80 und 82 sind fest mit dem hinteren Gestellteil 24 des Maschinengestells 20 verbunden. An ihrem oberen Ende sind die Säulen 80 und 82 mit Hilfe eines Oberzugs 84 verbunden. Die Säulen 80 und 82 dienen zur verschieblichen Lagerung eines Sägerahmens 86, der entlang der Säulen 80 und 82 in vertikaler Richtung bewegbar ist. Für einen Antrieb der Bewegung des Sägerahmens 86 ist ein Sägerahmenantrieb 88 vorgesehen, der an dem Oberzug 84 angeordnet ist.

Die zweite Sägeeinheit 36 weist eine Sägeband-Führungseinrichtung 90 auf, die sich in einer Ebene 92 erstreckt (siehe Figur 2). Die Sägeband-Führungseinrichtung 90 dient zur Führung eines Sägebands 94, dessen oberer Trum auf der dem hinteren Ende 14 der Sägevorrichtung 10 zugewandten Seite der Säulen 80, 82 geführt ist. Der untere Trum des Sägebands 94 verläuft auf der dem vorderen Ende 12 der Sägevorrichtung 10 zugewandten Seite der Säulen 80, 82. Der untere Trum des Sägebands 94 verläuft im Bereich der Transportbahn 26 der Sägevorrichtung 10 innerhalb einer zweiten Sägeebene 96, die sich in vertikaler Richtung erstreckt.

Die erste Sägeebene 76 der ersten Sägeeinheit 32 und die zweite Sägeebene 96 der zweiten Sägeeinheit 36 verlaufen parallel zueinander. Die Ebenen 76 und 72 schließen miteinander einen spitzen Winkel von beispielsweise 30° ein. Die Ebenen 92 und 96 schließen miteinander einen spitzen Winkel von beispielsweise 30° ein. Da die Sägeband-Führungseinrichtungen 70 und 90 auf einander abgewandten Seiten der ersten Sägeeinheit 32 und der zweiten Sägeeinheit 36 angeordnet sind, ist es möglich, die erste Sägeebene 76 und die zweite Sägeebene 96 mit einem relativ kleinen Abstand zueinander anzuordnen.

Unter weiterer Bezugnahme auf die Figuren 1 und 2 wird im Folgenden die Lagerung und der Aufbau der ersten Transporteinrichtung 30 beschrieben.

An der Oberseite des vorderen Gestellteils 22 des Maschinengestells 20 ist ein Schienenpaar 102 angeordnet, das parallel zu der Vorschubachse 16 verläuft. Dieses Schienenpaar ist in Figur 1 dargestellt. Ferner ist an der Oberseite des vorderen Gestellteils 22 ein Schienenpaar 104 angeordnet, das in Figur 2 dargestellt ist und ebenfalls parallel zu der Vorschubachse 16 verläuft. Die Schienenpaare 102 und 104 bilden gemeinsam eine erste Transporteinrichtungsführung 106. Die Schienenpaare 102 und 104 sind symmetrisch zu der Vorschubachse 16 angeordnet und sind zwischen den Schienenpaaren 42 und 44 der ersten Führungseinrichtung 40 der ersten Sägeeinheit 32 angeordnet.

Die erste Transporteinrichtung 30 weist ein erstes Wandteil 108 auf, das entlang des Schienenpaars 102 verschieblich geführt ist. Die erste Transporteinrichtung 30 weist ein zweites Wandteil 110 aus, das verschieblich entlang des Schienenpaars 104 geführt ist. Die Wandteile 108 und 110 sind über ein Deckenteil 112 und über ein Versteifungselement 114 fest miteinander verbunden.

In jedem der Wandteile 108, 110 der ersten Transporteinrichtung 30 ist ein Greifelement 116 angeordnet, das der Transportbahn 26 zugewandte, in vertikaler Richtung und parallel zueinander angeordnete Greifflächen 118 aufweist. Die Greifelemente 116 sind relativ zu den Wandteilen 108 und 110 beweglich, so dass sie in Richtung auf die Transportbahn 26 bewegt werden können, um ein Werkstück oder einen Werkstückabschnitt zu erfassen.

Die Schlitten 46 und 48 begrenzen gemeinsam mit dem Versteifungsrahmen 52 der ersten Sägeeinheit 32 einen in Figur 1 mit 122 bezeichneten Freiraum. Dieser Freiraum 122 ist so bemessen, dass die erste Transporteinrichtung 30 mit ihren Wandteilen 108 und 110 und mit ihrem Deckenteil 112 und ihrem Versteifungselement 114 in diesen Freiraum 122 einführbar ist. Hierfür können die erste Transporteinrichtung 30 und die erste Sägeeinheit 32 relativ zueinander entlang der Vorschubachse 16 bewegt werden.

Die Lagerung und der Aufbau der zweiten Transporteinrichtung 34 werden im Folgenden unter Bezugnahme auf Figur 2 beschrieben.

Die zweite Transporteinrichtung 34 ist in einer zu der Vorschubachse 16 parallelen Richtung beweglich an einem Trägerelement 124 gelagert, das an dem hinteren Gestellteil 24 befestigt ist. Für eine Bewegung der Transporteinrichtung 34 in zu der Vorschubachse 16 paralleler Richtung weist die zweite Transporteinrichtung 34 eine zweite Transporteinrichtungsführung (ohne Bezugszeichen) und einen zweiten Transporteinrichtungsantrieb (ohne Bezugszeichen) auf.

Die zweite Transporteinrichtung 34 weist auf einander gegenüberliegenden Seiten der Vorschubachse 16 angeordnete Seitenteile 126 und 128 auf, die sich in vertikaler Richtung erstrecken. Die Wandteile 126 und 128 sind an ihren oberen Enden mit einem Rahmenteil 130 verbunden, das sich in horizontaler Richtung erstreckt.

Jedes Wandteil 126 und 128 weist ein Greifelement 132 auf. Jedes der Greifelemente 132 weist eine der Transportbahn 26 zugewandte und im Wesentlichen sich in vertikaler Richtung erstreckende Greiffläche 134 auf. Die Greifelemente 132 können in horizontaler Richtung in Richtung auf die Vorschubachse 16 verschoben werden, um ein Werkstück oder einen Werkstückabschnitt zu erfassen.

Der Aufbau der dritten Transporteinrichtung 38 wird im Folgenden unter Bezugnahme auf Figuren 3 und 4 beschrieben.

Die dritte Transporteinrichtung 38 ist über eine in den Zeichnungen nicht dargestellte dritte Transporteinrichtungsführung geführt, so dass die dritte Transporteinrichtung 38 in zu der Vorschubachse 16 paralleler Richtung beweglich ist. Für einen Antrieb der Transporteinrichtung 38 entlang der Vorschubachse 16 umfasst die dritte Transporteinrichtung einen in den Zeichnungen nicht dargestellten Transporteinrichtungsantrieb.

Die dritte Transporteinrichtung 38 weist auf einander gegenüberliegenden Seiten der Vorschubachse 16 angeordnete, sich in vertikaler Richtung erstreckende Wandteile 136 und 138 auf, die an ihren oberen Enden mit Hilfe eines Deckenteils 140 verbunden sind. An den Wandteilen 136 und 138 ist jeweils ein Greifelement 144 gelagert, das sich in vertikaler Richtung erstreckende Greifflächen 146 aufweist. Die Greifelemente 144 können in Richtung auf die Vorschubachse 16 bewegt werden, um ein im Bereich der Transportbahn 26 angeordnetes Werkstück oder einen dort angeordneten Werkstückabschnitt zu erfassen.

Die Geometrie des Sägerahmens 86 sowie der Sägeband-Führungseinrichtung 90 der zweiten Sägeeinheit 36 ist so gewählt, dass ein die Transportbahn 26 umgebender Freiraum 148 entsteht. Die dritte Transporteinrichtung 38 kann in diesen Freiraum hinein bewegt werden, so dass der Sägerahmen 86 und die Sägeband-Führungseinrichtung 90 die dritte Transporteinrichtung 38 umgeben (vergleiche auch Figur 4).

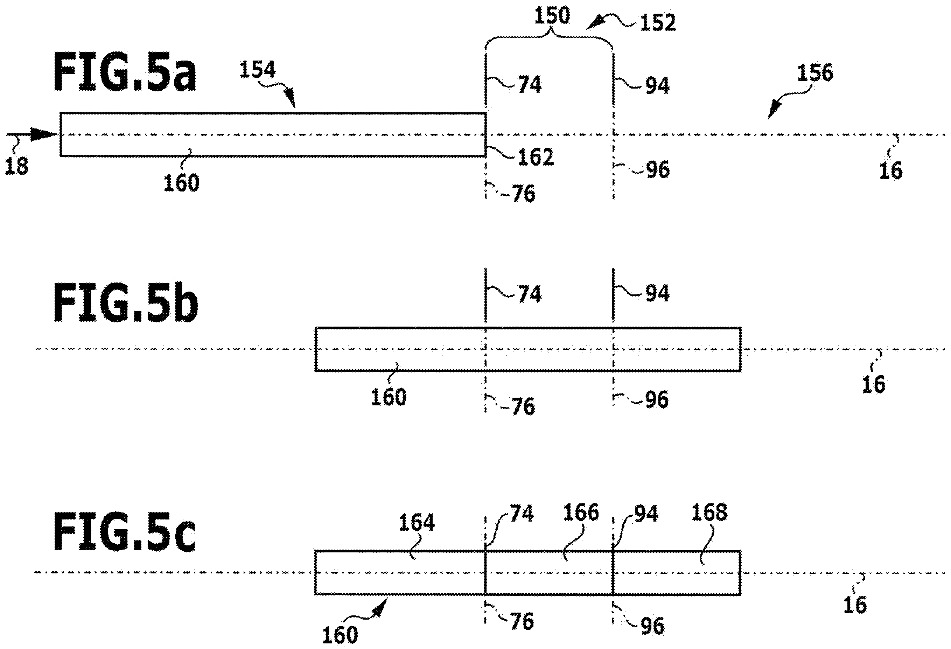

Die Funktionsweise der Sägevorrichtung 10 wird im Folgenden unter Bezugnahme auf Figuren 5a bis 5i beschrieben.

In den Figuren 5a bis 5i ist die Vorschubachse 16 der Sägevorrichtung 10 dargestellt. Die Sägeebenen 76 und 96 verlaufen quer und insbesondere senkrecht zu der Vorschubachse 16. Die erste Sägeebene 76 und die zweite Sägeebene 96 weisen zueinander einen Abstand 150 auf (vergleiche Figur 5a). Die Sägeebenen 76 und 96 begrenzen zwischen sich einen mittleren Vorrichtungsbereich 152. Die Sägeebene 76 begrenzt einen in Figur 5a linkerhand dargestellten vorderen Vorrichtungsbereich 154, der in Vorschubrichtung 18 gesehen vor der ersten Sägeebene 76 angeordnet ist. Die zweite Sägeebene 96 begrenzt einen hinteren Vorrichtungsbereich 156, der in Vorschubrichtung 18 gesehen hinter der zweiten Sägeebene 96 angeordnet ist.

In Figur 5a ist ein metallisches, vollzylindrisches Werkstück 160 in einer Seitenansicht dargestellt. Dieses ist in dem vorderen Vorrichtungsbereich 154 angeordnet und erstreckt sich entlang der Vorschubachse 16. Das Werkstück 160 weist ein Werkstückvorderende 162 auf, das auf Höhe der ersten Sägeebene 76 angeordnet ist. Das Sägeband 74 der ersten Sägeeinheit 32 ist in Figur 5a in einer Ruhelage dargestellt, in der das Sägeband 74 außer Eingriff mit dem Werkstück 160 steht. Das Sägeband 94 der zweiten Sägeeinheit 36 ist in Figur 5a ebenfalls in seiner Ruhelage dargestellt.

Ausgehend von der in Figur 5a dargestellten Lage des Werkstücks 160 wird das Werkstück mit Hilfe der Transporteinrichtung 30 erfasst, indem die Greifelemente 116 der ersten Transporteinrichtung 30 in Richtung auf das Werkstück 160 verfahren werden, bis die Greifflächen 118 mit dem Werkstück 160 in einem kraftschlüssigen Eingriff stehen. Anschließend kann mit Hilfe des ersten Transporteinrichtungsantriebs 120 die erste Transporteinrichtung 30 in der Vorschubrichtung 18 entlang der Vorschubachse 16 verfahren werden. Hierbei wird die erste Transporteinrichtung 30 um einen Verfahrweg parallel zu der Vorschubachse 16 verfahren, dessen Länge doppelt so lang ist wie der Abstand 150 zwischen den Sägeebenen 76 und 96. Auf diese Weise wird das Werkstück 160 aus der in Figur 5a dargestellten Lage heraus in die in Figur 5b dargestellte Lage gebracht, in der das Werkstück 160 die Sägeebenen 76 und 96 durchsetzt.

In einem folgenden Verfahrensschritt, der in Figur 5c dargestellt ist, werden die Sägebänder 74 und 94 aus ihren in Figur 5b dargestellten Ruhelagen heraus in ihre in Figur 5c dargestellten Arbeitslagen verfahren, in denen sie mit dem Werkstück 160 in Eingriff stehen. Hierfür werden der Sägerahmen 66 der ersten Sägeeinheit 32 und der Sägerahmen 86 der zweiten Sägeeinheit 36 mit Hilfe der Sägerahmenantriebe 68 und 88 in vertikaler Richtung nach unten in Richtung auf die Transportbahn 26 bewegt. Mit Hilfe der Sägeband-Antriebe 78 und 98 werden die Sägebänder 74 und 94 umlaufend angetrieben, so dass diese das Werkstück 160 in drei Werkstückabschnitte zerteilen, nämlich in einen ersten Werkstückabschnitt 164, der in dem vorderen Vorrichtungsbereich 154 angeordnet ist, in einen zweiten Werkstückabschnitt 166, der in dem mittleren Vorrichtungsbereich 152 angeordnet ist, und in einen dritten Werkstückabschnitt 168, der in dem hinteren Vorrichtungsbereich 156 angeordnet ist.

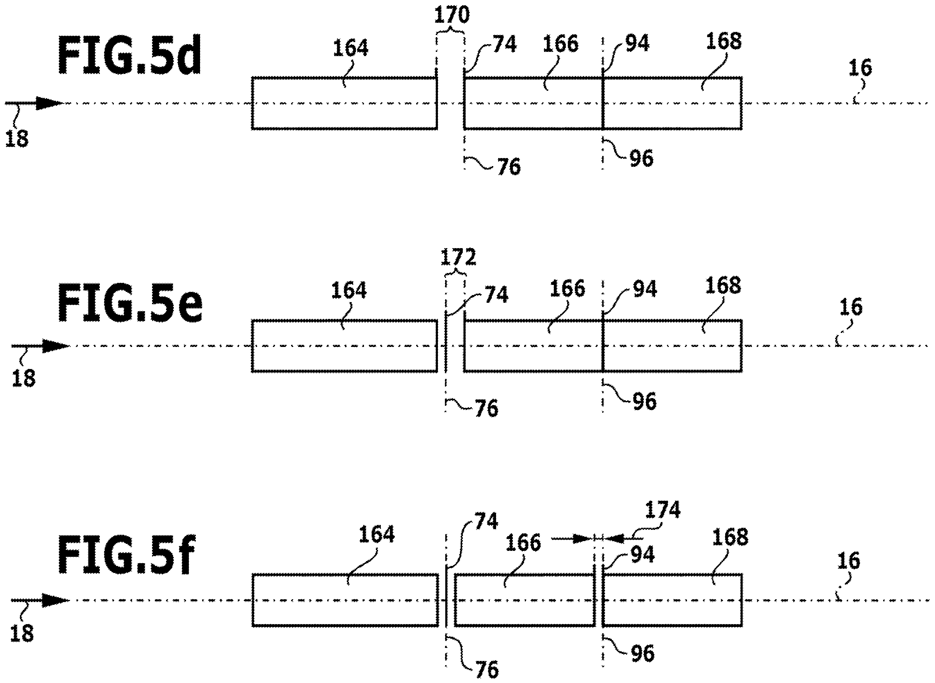

Ein auf die Zerteilung des Werkstücks 160 in die Werkstückabschnitte 164 bis 168 folgender Verfahrensschritt ist in Figur 5d dargestellt. Ausgehend aus der in Figur 5c dargestellten Lage wird der erste Werkstückabschnitt 164 in zu der Vorschubrichtung 18 entgegengesetzter Richtung um einen ersten Rückhubbetrag 170 bewegt, indem die erste Transporteinrichtung 30 um einen entsprechenden Betrag entgegen der Vorschubrichtung 18 verfahren wird. Der erste Rückhubbetrag 170 kann beispielsweise 30 mm betragen.

In einem folgenden, in Figur 5e dargestellten Verfahrensschritt wird die erste Sägeeinheit 32 in zu der Vorschubrichtung 18 entgegengesetzter Richtung mit Hilfe des Sägeeinheitsantriebs 50 um einen zweiten Rückhubbetrag 172 verfahren, beispielsweise um 20 mm. Der zweite Rückhubbetrag 172 ist kleiner als der erste Rückhubbetrag 170.

In einem folgenden, in Figur 5f dargestellten Verfahrensschritt wird der zweite Werkstückabschnitt 166 in zu der Vorschubrichtung 18 entgegengesetzter Richtung entlang der Vorschubachse 16 bewegt, indem die zweite Transporteinrichtung 34 den Werkstückabschnitt 166 mit Hilfe der Greifelemente 132 erfasst und in diesem Zustand um einen dritten Rückhubbetrag 174 in zu der Vorschubrichtung 18 entgegengesetzter Richtung verfahren wird. Der dritte Rückhubbetrag 174 kann beispielsweise 10 mm betragen. Der dritte Rückhubbetrag 174 ist kleiner als der zweite Rückhubbetrag 172.

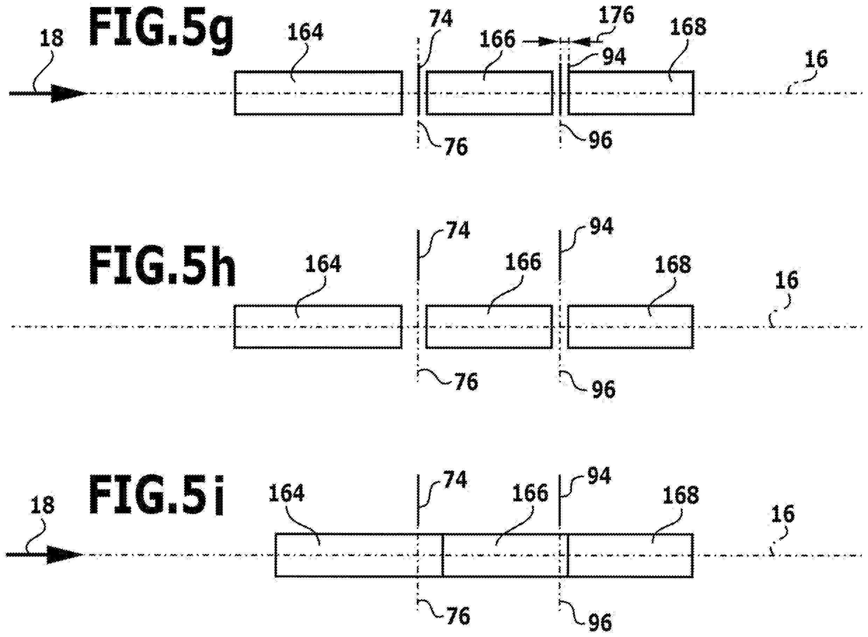

In einem folgenden, in Figur 5g dargestellten Verfahrensschritt wird der dritte Werkstückabschnitt 168 in Vorschubrichtung 18 um einen Vorhubbetrag 176 bewegt. Hierfür wird die dritte Transporteinrichtung 38, die den dritten Werkstückabschnitt 168 erfasst, in der Vorschubrichtung 18 in zu der Vorschubachse 16 paralleler Richtung verschoben. Der Vorhubbetrag 176 kann beispielsweise 10 mm betragen.

Die unter Bezugnahme auf Figuren 5d bis 5g beschriebenen Verfahrensschritte bewirken, dass die Sägebänder 74 und 94, die sich in diesen Phasen des Verfahrens in ihren Arbeitslagen befinden, freigelegt werden, so dass die Sägebänder 74, 94 nicht mehr mit den durch die Zerteilung des Werkstücks 160 entstandenen Schnittflächen der Werkstückabschnitte 164 bis 168 in Kontakt stehen. Dies ermöglicht es, die Sägebänder 74 und 94 durch Anheben der Sägerahmen 66 und 86 aus ihren in der Figur 5g dargestellten Arbeitslagen in ihre in Figur 5h dargestellten Ruhelagen zu verfahren, ohne dabei die Schnittflächen der Werkstückabschnitte 164 bis 168 zu berühren.

In einem abschließenden Verfahrensschritt, der in Figur 5i dargestellt ist, können die Werkstückabschnitte 166 und 168 aus der Sägevorrichtung 10 heraus geschoben werden, indem der erste Werkstückabschnitt 164 mit Hilfe der ersten Transporteinrichtung 30 in Vorschubrichtung 18 entlang der Vorschubachse 16 bewegt wird. Hierbei werden die durch die Zerteilung des Werkstücks 160 entstandenen Schnittflächen aufeinander gedrückt, so dass es mit Hilfe nur einer Transporteinrichtung 30 möglich ist, alle Werkstückabschnitte 164, 166, 168 aus der Sägevorrichtung 10 heraus zu transportieren.

Die Sägevorrichtung 10 zeichnet sich durch eine hohe Schnittleistung aus, bei der die erste Sägeeinheit 32 und die zweite Sägeeinheit 36 ein Werkstück 160 gleichzeitig bearbeiten können. Mit Hilfe der Transporteinrichtungen 30, 34 und 38 ist es möglich, die durch Zerteilung eines Werkstücks 160 entstandenen Werkstückabschnitte 164 bis 168 so zu handhaben, dass die Sägebänder 74 und 94 schonend aus ihren Arbeitlagen heraus zurück in ihre Ruhelage gebracht werden können. Hierdurch erhöht sich die Betriebszeit der Sägevorrichtung 10.

Durch die aufeinander abgestimmten Abmessungen der ersten Sägeeinheit 32 und der ersten Transporteinrichtung 30 und der zweiten Sägeeinheit 36 und der dritten Transporteinrichtung 38 wird ein sehr kompakter Aufbau der Sägevorrichtung 10 ermöglicht. Die zweite Transporteinrichtung 34 zeichnet sich durch einen vergleichsweise flachen Aufbau aus, so dass die Sägeebenen 76 und 96 nahe zueinander angeordnet werden können, wenn ein sehr kurzer zweiter Werkstückabschnitt 166 erzeugt werden soll. Durch die Anordnung der Sägewand-Führungseinrichtungen 70 und 90 auf einander abgewandten Seiten der Sägeeinheiten 32 und 36 ist es ebenfalls möglich, die Sägeebenen 76 und 96 in einen kleinen Abstand zueinander zu bringen.

## Patentansprüche

1. Sägevorrichtung mit einer Vorschubachse (16) für ein sägend zu bearbeitendes Werkstück (160), mit einer ersten Sägeeinheit (32) für eine sägende Bearbeitung des Werkstücks (160) in einer sich quer zu der Vorschubachse (16) erstreckenden ersten Sägeebene (76) und mit einer zweiten Sägeeinheit (36) für eine sägende Bearbeitung des Werkstücks (160) in einer sich quer zu der Vorschubachse (16) erstreckenden zweiten Sägeebene (96), mit einem zwischen den Sägeebenen (76, 96) angeordneten mittleren Vorrichtungsbereich (152), mit einem in einer Vorschubrichtung (18) gesehen vor der ersten Sägeebene (76) angeordneten vorderen Vorrichtungsbereich (154) und mit einem in der Vorschubrichtung (18) gesehen hinter der zweiten Sägeebene (96) angeordneten hinteren Vorrichtungsbereich (156), wobei die Sägevorrichtung (10) mindestens zwei in unterschiedlichen Vorrichtungsbereichen (152, 154, 156) angeordnete Transporteinrichtungen (30, 34, 38) zum Transport unterschiedlicher Werkstückabschnitte (164, 166, 168) entlang der Vorschubachse (16) umfasst, mit einer in dem vorderen Vorrichtungsbereich (154) angeordneten ersten Transporteinrichtung (30), **dadurch gekennzeichnet, dass** die erste Transporteinrichtung (30) in einer zu der Vorschubachse (16) parallelen Richtung bewegbar ist.

2. Sägevorrichtung nach Anspruch 1, **dadurch gekennzeichnet, dass** der Abstand (150) zwischen der ersten Sägeebene (76) und der zweiten Sägeebene (96) einstellbar ist.

3. Sägevorrichtung nach einem der vorangehenden Ansprüche, **gekennzeichnet durch** einen ersten Transporteinrichtungsantrieb (120) für eine Bewegung der ersten Transporteinrichtung (30) in einer zu der Vorschubachse (16) parallelen Richtung, und insbesondere durch eine erste Transporteinrichtungsführung (106) zur Führung einer Bewegung der ersten Transporteinrichtung (30).

4. Sägevorrichtung nach Anspruch 3, **dadurch gekennzeichnet, dass** die erste Transporteinrichtung (30) und die erste Sägeeinheit (32) entlang der Vorschubachse (16) gesehen in einer Relativlage anordenbar sind, in der sich die erste Transporteinrichtung (30) und die erste Sägeeinheit (32) zumindest abschnittsweise überdecken, und insbesondere dass die erste Sägeeinheit (32) einen sich quer zu der Vorschubachse (16) erstreckenden Freiraum (122) begrenzt, in welchem zumindest ein Abschnitt der ersten Transporteinrichtung (30) anordenbar ist.

5. Sägevorrichtung nach einem der vorangehenden Ansprüche, **gekennzeichnet durch** eine in dem mittleren Vorrichtungsbereich (152) angeordnete zweite Transporteinrichtung (34), und insbesondere dass die zweite Transporteinrichtung (34) in einer zu der Vorschubachse (16) parallelen Richtung bewegbar ist, und insbesondere durch einen zweiten Transporteinrichtungsantrieb für eine Bewegung der zweiten Transporteinrichtung (34) in einer zu der Vorschubachse (16) parallelen Richtung, und insbesondere durch eine zweite Transporteinrichtungsführung zur Führung einer Bewegung der zweiten Transporteinrichtung (34).

6. Sägevorrichtung nach Anspruch 5, **dadurch gekennzeichnet, dass** die zweite Transporteinrichtung (34) und die erste Sägeeinheit (32) und/oder dass die zweite Transporteinrichtung (34) und die zweite Sägeeinheit (36) entlang der Vorschubachse (16) gesehen in einer Relativlage anordenbar sind, in der sich die zweite Transporteinrichtung (34) und die erste Sägeeinheit (32) und/oder in der sich die zweite Transporteinrichtung (34) und die zweite Sägeeinheit (36) zumindest abschnittsweise überdecken, und insbesondere dass die erste Sägeeinheit (32) einen sich quer zu der Vorschubachse (16) erstreckenden Freiraum (122) begrenzt und/oder dass die zweite Sägeeinheit (36) einen sich quer zu der Vorschubachse (16) erstreckenden Freiraum (148) begrenzt, in welchem und/oder in welchen zumindest ein Abschnitt der zweiten Transporteinrichtung (34) anordenbar ist.

7. Sägevorrichtung nach einem der vorangehenden Ansprüche, **gekennzeichnet durch** eine in dem hinteren Vorrichtungsbereich (156) angeordnete dritte Transporteinrichtung (38), und insbesondere dass die dritte Transporteinrichtung (38) in einer zu der Vorschubachse (16) parallelen Richtung bewegbar ist, und insbesondere durch einen dritten Transporteinrichtungsantrieb für eine Bewegung der dritten Transporteinrichtung (38) in einer zu der Vorschubachse (16) parallelen Richtung, und insbesondere durch eine dritte Transporteinrichtungsführung zur Führung einer Bewegung der dritten Transporteinrichtung (38).

8. Sägevorrichtung nach Anspruch 7, **dadurch gekennzeichnet, dass** die dritte Transporteinrichtung (38) und die zweite Sägeeinheit (36) entlang der Vorschubachse (16) gesehen in einer Relativlage anordenbar sind, in der sich die dritte Transporteinrichtung (38) und die zweite Sägeeinheit (36) zumindest abschnittsweise überdecken, und insbesondere dass die zweite Sägeeinheit (36) einen sich quer zu der Vorschubachse (16) erstreckenden Freiraum (148) begrenzt, in welchem zumindest ein Abschnitt der dritten Transporteinrichtung (38) anordenbar ist.

9. Sägevorrichtung nach einem der vorangehenden Ansprüche, **gekennzeichnet durch** eine Führungseinrichtung zur Führung einer Bewegung der ersten Sägeeinheit (32) und zur Führung einer Bewegung der zweiten Sägeeinheit (36).

10. Sägevorrichtung nach einem der vorangehenden Ansprüche, **gekennzeichnet durch** eine Transporteinrichtungsführung zur Führung einer Bewegung der mindestens zwei Transporteinrichtungen (30, 34, 38).

11. Sägevorrichtung nach einem der vorangehenden Ansprüche, **gekennzeichnet durch** eine Führungseinrichtung (40) zur Führung einer Bewegung mindestens einer Sägeeinheit (32, 36) und durch eine Transporteinrichtungsführung (106) zur Führung einer Bewegung mindestens einer Transporteinrichtung (30, 34, 38), wobei die Führungseinrichtung (40) und die Transporteinrichtungsführung (106) derart zueinander versetzt angeordnet sind, dass sie zu der Vorschubachse (16) unterschiedlich beabstandet sind.

12. Sägevorrichtung nach einem der vorangehenden Ansprüche, **dadurch gekennzeichnet, dass** die erste Sägeeinheit (32) und/oder die zweite Sägeeinheit (36) eine Bandsägeeinheit ist oder sind, und insbesondere dass die Bandsägeeinheit einen Sägerahmen (66, 86) umfasst, und insbesondere dass die Bandsägeeinheit eine Sägeband-Führungseinrichtung (70, 90) umfasst.

13. Sägevorrichtung nach Anspruch 12, **dadurch gekennzeichnet, dass** sich die Sägeband-Führungseinrichtung (70, 90) einer Sägeeinheit (32, 36) in einer Ebene (72, 92) erstreckt, die winklig zu der dieser Sägeeinheit (32, 36) zugeordneten Sägeebene (76, 96) verläuft, und insbesondere dass eine Sägeband-Führungseinrichtung (70) der ersten Sägeeinheit (32) und eine Sägeband-Führungseinrichtung (90) der zweiten Sägeeinheit (36) auf einander abgewandten Seiten der Sägeeinheiten (32, 36) angeordnet sind.

14. Verfahren zur sägenden Bearbeitung eines Werkstücks (160), umfassend:
- ein Werkstück (160) wird relativ zu einer Sägevorrichtung (10) positioniert, indem es in einer Vorschubrichtung (18) entlang einer Vorschubachse (16) der Sägevorrichtung (10) bewegt wird, so dass das Werkstück (160) eine sich quer zu der Vorschubachse (16) erstreckende erste Sägeebene (76) und eine sich quer zu der Vorschubachse (16) erstreckende zweite Sägeebene (96) durchsetzt;
- die erste Sägeeinheit (32) und/oder die zweite Sägeeinheit (36) wird in zu der Vorschubachse (16) paralleler Richtung bewegt, bevor mindestens eine der Sägeeinheiten (32, 36) aus ihrer Arbeitslage in ihre Ruhelage überführt wird, und
- das Werkstück (160) wird in drei Werkstückabschnitte (164, 166, 168) zerteilt, indem eine der ersten Sägeebene (76) zugeordnete erste Sägeeinheit (32) und indem eine der zweiten Sägeebene (96) zugeordnete zweite Sägeeinheit (36) jeweils aus einer Ruhelage, in welcher die Sägeeinheiten (32, 36) außer Eingriff mit dem Werkstück (160) stehen, in eine Arbeitslage, in welcher die Sägeeinheiten (32, 36) in Eingriff mit dem Werkstück (160) stehen, überführt werden; dadurch gezeichnet dass
- mindestens zwei der drei Werkstückabschnitte (164, 166, 168) unabhängig voneinander entlang der Vorschubachse (16) bewegt werden.

15. Verfahren nach Anspruch 14, **dadurch gekennzeichnet, dass** zur Positionierung des Werkstücks (160) relativ zu der Sägevorrichtung (10) das Werkstück (160) um das Doppelte eines Abstands (150) zwischen der ersten Sägeebene (76) und der zweiten Sägeebene (96) entlang der Vorschubachse (16) bewegt wird, und insbesondere dass ein in Vorschubrichtung (18) gesehen vor der ersten Sägeebene (76) angeordneter erster Werkstückabschnitt (164) in zu der Vorschubrichtung (18) entgegengesetzter Richtung um einen ersten Rückhubbetrag (170) bewegt wird, und insbesondere dass die erste Sägeeinheit (32) in zu der Vorschubrichtung (18) entgegengesetzter Richtung um einen zweiten Rückhubbetrag (172) bewegt wird, der kleiner ist als der erste Rückhubbetrag (170), und insbesondere dass ein zwischen den Sägeebenen (76, 96) angeordneter zweiter Werkstückabschnitt (166) in zu der Vorschubrichtung (18) entgegengesetzter Richtung um einen dritten Rückhubbetrag (174) bewegt wird, der kleiner ist als der zweite Rückhubbetrag (172), und insbesondere dass ein in Vorschubrichtung (18) gesehen hinter der zweiten Sägeebene (96) angeordneter dritter Werkstückabschnitt (168) in der Vorschubrichtung (18) um einen Vorhubbetrag (176) bewegt wird, und insbesondere dass die zweite Sägeeinheit (36) in Vorschubrichtung (18) um einen zweiten Vorhubbetrag bewegt wird, der kleiner ist als der erste Vorhubbetrag, um welchen der dritte Werkstückabschnitt bewegt wird, und insbesondere dass ein zwischen den Sägeebenen (76, 96) angeordneter zweiter Werkstückabschnitt (166) in Vorschubrichtung (18) um einen dritten Vorhubbetrag bewegt wird, der kleiner ist als der zweite Vorhubbetrag, und insbesondere dass ein in Vorschubrichtung (18) gesehen vor der ersten Sägeebene (76) angeordneter erster Werkstückabschnitt (164) in zu der Vorschubrichtung (18) entgegengesetzter Richtung um einen Rückhubbetrag bewegt wird, und insbesondere dass an eine Überführung der ersten Sägeeinheit (32) und der zweiten Sägeeinheit (36) in ihre Ruhelagen anschließend die Werkstückabschnitte (164, 166, 168) in Vorschubrichtung (18) bewegt werden, indem ein in Vorschubrichtung (18) gesehen vor der ersten Sägeebene (76) angeordneter erster Werkstückabschnitt (164) in Vorschubrichtung (18) bewegt wird und einen zwischen den Sägeebenen (76, 96) angeordneten zweiten Werkstückabschnitt (166) unmittelbar und einen in Vorschubrichtung (18) gesehen hinter der zweiten Sägeebene (96) angeordneten dritten Werkstückabschnitt (168) mittels des zweiten Werkstückabschnitts (166) antreibt.

## Claims

1. Saw device with a feed axis (16) for a workpiece (160) to be sawed, with a first saw unit (32) to saw the workpiece (160) in a first sawing plane (76) extending transversely to the feed axis (16) and with a second saw unit (36) to saw the workpiece (160) in a second sawing plane (96) extending transversely to the feed axis (16), with a central device region (152) arranged between the sawing planes (76, 96), with a front device region (154) arranged in front of the first sawing plane (76), viewed in a feed direction (18), and with a rear device region (156) arranged behind the second sawing plane (96), viewed in the feed direction (18), wherein the saw device (10) comprises at least two transport mechanisms (30, 34, 38) arranged in different device regions (152, 154, 156) for transporting different workpiece portions (164, 166, 168) along the feed axis (16), with a first transport mechanism (30) arranged in the front device region (154), **characterised in that** the first transport mechanism (30) can be moved in a direction parallel to the feed axis (16).

2. Saw device according to claim 1, **characterised in that** the spacing (150) between the first sawing plane (76) and the second sawing plane (96) can be adjusted.

3. Saw device according to any one of the preceding claims, **characterised by** a first transport mechanism drive (120) for a movement of the first transport mechanism (30) in a direction parallel to the feed axis (16), and in particular by a first transport mechanism guide (106) to guide a movement of the first transport mechanism (30).

4. Saw device according to Claim 3, **characterised in that** the first transport mechanism (30) and the first saw unit (32), viewed along the feed axis (16), can be arranged in a relative position, in which the first transport mechanism (30) and the first saw unit (32) overlap at least in portions, and in particular **in that** the first saw unit (32) delimits a free space (122) which extends transversely to the feed axis (16) and in which at least a portion of the first transport mechanism (30) can be disposed.

5. Saw device according to any one of the preceding claims, **characterised by** a second transport mechanism (34) arranged in the central device region (152), and in particular in that the second transport mechanism (34) can be moved in a direction parallel to the feed axis (16), and in particular by a second transport mechanism drive for a movement of the second transport mechanism (34) in a direction parallel to the feed axis (16), and in particular by a second transport mechanism guide to guide a movement of the second transport mechanism (34).

6. Saw device according to Claim 5, **characterised in that** the second transport mechanism (34) and the first saw unit (32) and/or the second transport mechanism (34) and the second saw unit (36), viewed along the feed axis (16), can be arranged in a relative position, in which the second transport mechanism (34) and the first saw unit (32) and/or in which the second transport mechanism (34) and the second saw unit (36) overlap, at least in portions, and in particular **in that** the first saw unit (32) delimits a free space (122) extending transversely to the feed axis (16) and/or **in that** the second saw unit (36) delimits a free space (148) extending transversely to the feed axis (16), in which space or spaces at least a portion of the second transport mechanism (34) can be disposed.

7. Saw device according to any one of the preceding claims, **characterised by** a third transport mechanism (38) arranged in the rear device region (156), and in particular in that the third transport mechanism (38) can be moved in a direction parallel to the feed axis (16), and in particular by a third transport mechanism drive for a movement of the third transport mechanism (38) in a direction parallel to the feed axis (16), and in particular by a third transport mechanism guide to guide a movement of the third transport mechanism (38).

8. Saw device according to Claim 7, **characterised in that** the third transport mechanism (38) and the second saw unit (36), viewed along the feed axis (16), can be arranged in a relative position, in which the third transport mechanism (38) and the second saw unit (36) overlap, at least in portions, and in particular **in that** the second saw unit (36) delimits a free space (148) which extends transversely to the feed axis (16) and in which at least one portion of the third transport mechanism (38) can be disposed.

9. Saw device according to any one of the preceding claims, **characterised by** a guide mechanism to guide a movement of the first saw unit (32) and to guide a movement of the second saw unit (36).

10. Saw device according to any one of the preceding claims, **characterised by** a transport mechanism guide to guide a movement of the at least two transport mechanisms (30, 34, 38).

11. Saw device according to any one of the preceding claims, **characterised by** a guide mechanism (40) to guide a movement of at least one saw unit (32, 36) and by a transport mechanism guide (106) to guide a movement of at least one transport mechanism (30, 34, 38), the guide mechanism (40) and the transport mechanism guide (106) being arranged offset with respect to one another in such a way that they are at different spacings from the feed axis (16).

12. Saw device according to any one of the preceding claims, **characterised in that** the first saw unit (32) and/or the second saw unit (36) is or are a band saw unit, and in particular **in that** the band saw unit comprises a saw frame (66, 86), and in particular **in that** the band saw unit comprises a saw band guide mechanism (70, 90).

13. Saw device according to claim 12, **characterised in that** the saw band guide mechanism (70, 90) of a saw unit (32, 36) extends in a plane (72, 92), which extends at an angle to the sawing plane (76, 96) associated with this saw unit (32, 36), and in particular **in that** a saw band guide mechanism (70) of the first saw unit (32) and a saw band guide mechanism (90) of the second saw unit (36) are arranged on sides of the saw units (32, 36) remote from one another.

14. Method for sawing a workpiece (160), comprising:
- a workpiece (160) is positioned relative to a saw device (10), in that it is moved in a feed direction (18) along a feed axis (16) of the saw device (10), so that the workpiece (160) passes through a first sawing plane (76) extending transversely to the feed axis (16) and a second sawing plane (96) extending transversely to the feed axis (16),
- the first saw unit (32) and/or the second saw unit (36) is moved in the direction parallel to the feed axis (16), before at least one of the saw units (32, 36) is transferred from its working position into its rest position,
- the workpiece (160) is divided into three workpiece portions (164, 166, 168), in that a first saw unit (32) associated with the first sawing plane (76) and in that a second saw unit (36) associated with the second sawing plane (96) are in each case transferred from a rest position, in which the saw units (32, 36) are disengaged from the workpiece (160), into a working position, in which the saw units (32, 36) are engaged with the workpiece (160);
- **characterised in that**
- at least two of the three workpiece portions (164, 166, 168) are moved independently of one another along the feed axis (16).

15. Method according to claim 14, **characterised in that** to position the workpiece (160) relative to the saw device (10), the workpiece (160) is moved by twice a spacing (150) between the first sawing plane (76) and the second sawing plane (96) along the feed axis (16), and in particular **in that** a first workpiece portion (164) arranged in front of the first sawing plane (76), viewed in the feed direction (18), is moved by a first return stroke amount (170) in the direction opposing the feed direction (18), and in particular **in that** the first saw unit (32) is moved in the direction opposing the feed direction (18) by a second return stroke amount (172), which is smaller than the first return stroke amount (170), and in particular **in that** a second workpiece portion (166) arranged between the sawing planes (76, 96) is moved in the direction opposing the feed direction (18) by a third return stroke amount (174), which is smaller than the second return stroke amount (172), and in particular **in that** a third workpiece portion (168) arranged behind the second sawing plane (96), viewed in the feed direction (18), is moved in the feed direction (18) by a forward stroke amount (176), and in particular **in that** the second saw unit (36) is moved in the feed direction (18) by a second forward stroke amount, which is smaller than the first forward stroke amount, by which the third workpiece portion is moved, and in particular **in that** a second workpiece portion (166) arranged between the sawing planes (76, 96) is moved in the feed direction (18) by a third forward stroke amount, which is smaller than the second forward stroke amount, and in particular **in that** a first workpiece portion (164) arranged in front of the first sawing plane (76), viewed in the feed direction (18), is moved by a return stroke amount in the direction opposing the feed direction (18), and in particular **in that** following a transfer of the first saw unit (32) and the second saw unit (36) into their rest positions, the workpiece portions (164, 166, 168) are moved in the feed direction (18), **in that** a first workpiece portion (164) arranged in front of the first sawing plane (76), viewed in the feed direction (18), is moved in the feed direction (18) and directly drives a second workpiece portion (166) arranged between the sawing planes (76, 96) and drives a third workpiece portion (168) arranged behind the second sawing plane (96), viewed in the feed direction (18), by means of the second workpiece portion (166).

## Revendications

1. Dispositif de sciage comprenant un axe d'avancement (16) pour une pièce (160) à usiner par sciage, comprenant une première unité de sciage (32) en vue d'un usinage par sciage de la pièce (160) dans un premier plan de sciage (76) s'étendant de manière transversale par rapport à l'axe d'avancement (16) et comprenant une deuxième unité de sciage (36) en vue d'un usinage par sciage de la pièce (160) dans un deuxième plan de sciage (96) s'étendant de manière transversale par rapport à l'axe d'avancement (16), comprenant une zone de dispositif centrale (152) disposée entre les plans de sciage (76, 96), comprenant une zone de dispositif avant (154) disposée, vue dans une direction d'avancement (18), devant le premier plan de sciage (76) et comprenant une zone de dispositif arrière (156) disposée, vue dans la direction d'avancement (18), derrière le deuxième plan de sciage (96), dans lequel le dispositif de sciage (10) comprend au moins deux systèmes de transport (30, 34, 38) disposés dans des zones de dispositif (152, 154, 156) différentes servant au transport de différentes sections de pièce (164, 166, 168) le long de l'axe d'avancement (16), comprenant un premier système de transport (30) disposé dans la zone de dispositif avant (154), **caractérisé en ce que** le premier système de transport (30) est mobile dans une direction parallèle par rapport à l'axe d'avancement (16).

2. Dispositif de sciage selon la revendication 1, **caractérisé en ce que** la distance (150) entre le premier plan de sciage (76) et le deuxième plan de sciage (96) est réglable.

3. Dispositif de sciage selon l'une quelconque des revendications précédentes, **caractérisé par** un premier entraînement de système de transport (120) en vue d'un déplacement du premier système de transport (30) dans une direction parallèle par rapport à l'axe d'avancement (16), et en particulier par un premier guidage de système de transport (106) servant à guider un déplacement du premier système de transport (30).

4. Dispositif de sciage selon la revendication 3, **caractérisé en ce que** le premier système de transport (30) et la première unité de sciage (32) peuvent être disposés, vus le long de l'axe d'avancement (16), dans une position relative, dans laquelle le premier système de transport (30) et la première unité de sciage (32) se chevauchent au moins par endroits, et en particulier que la première unité de sciage (32) délimite un espace libre (122) s'étendant de manière transversale par rapport à l'axe d'avancement (16), dans lequel au moins une section du premier système de transport (30) peut être disposée.

5. Dispositif de sciage selon l'une quelconque des revendications précédentes, **caractérisé par** un deuxième système de transport (34) disposé dans la zone de dispositif centrale (152), et en particulier que le deuxième système de transport (34) peut être déplacé dans une direction parallèle par rapport à l'axe d'avancement (16), et en particulier par un deuxième entraînement de système de transport en vue d'un déplacement du deuxième système de transport (34) dans une direction parallèle par rapport à l'axe d'avancement (16), et en particulier par un deuxième guidage de système de transport servant à guider un déplacement du deuxième système de transport (34).

6. Dispositif de sciage selon la revendication 5, **caractérisé en ce que** le deuxième système de transport (34) et la première unité de sciage (32) et/ou que le deuxième système de transport (34) et la deuxième unité de sciage (36) peuvent être disposés, vus le long de l'axe d'avancement (16), dans une position relative, dans laquelle le deuxième système de transport (34) et la première unité de sciage (32) et/ou dans laquelle le deuxième système de transport (34) et la deuxième unité de sciage (36) se chevauchent au moins par endroits, et en particulier que la première unité de sciage (32) délimite un espace libre (122) s'étendant de manière transversale par rapport à l'axe d'avancement (16) et/ou que la deuxième unité de sciage (36) délimite un espace libre (148) s'étendant de manière transversale par rapport à l'axe d'avancement (16), dans lequel au moins une section du deuxième système de transport (34) peut être disposée.

7. Dispositif de sciage selon l'une quelconque des revendications précédentes, **caractérisé par** un troisième système de transport (38) disposé dans la zone de dispositif arrière (156), et en particulier que le troisième système de transport (38) peut être déplacé dans une direction parallèle par rapport à l'axe d'avancement (16), et en particulier par un troisième entraînement de système de transport en vue d'un déplacement du troisième système de transport (38) dans une direction parallèle par rapport à l'axe d'avancement (16), et en particulier par un troisième guidage de système de transport servant à guider un déplacement du troisième système de transport (38).

8. Dispositif de sciage selon la revendication 7, **caractérisé en ce que** le troisième système de transport (38) et la deuxième unité de sciage (36) peuvent être disposés, vus le long de l'axe d'avancement (16), dans une position relative, dans laquelle le troisième système de transport (38) et la deuxième unité de sciage (36) se chevauchent au moins par endroits, et en particulier **en ce que** la deuxième unité de sciage (36) délimite un espace libre (148) s'étendant de manière transversale par rapport à l'axe d'avancement (16), dans lequel au moins une section du troisième système de transport (38) peut être disposée.

9. Dispositif de sciage selon l'une quelconque des revendications précédentes, **caractérisé par** un système de guidage servant à guider un déplacement de la première unité de sciage (32) et servant à guider un déplacement de la deuxième unité de sciage (36).

10. Dispositif de sciage selon l'une quelconque des revendications précédentes, **caractérisé par** un guidage de système de transport servant à guider un déplacement des deux systèmes de transport (30, 34, 38) ou plus.

11. Dispositif de sciage selon l'une quelconque des revendications précédentes, **caractérisé par** un système de guidage (40) servant à guider un déplacement d'au moins une unité de sciage (32, 36) et par un guidage de système de transport (106) servant à guider un déplacement d'au moins un système de transport (30, 34, 38), dans lequel le système de guidage (40) et le guidage de système de transport (106) sont disposés de manière décalée l'un par rapport à l'autre de telle manière qu'ils sont espacés différemment par rapport à l'axe d'avancement (16).

12. Dispositif de sciage selon l'une quelconque des revendications précédentes, **caractérisé en ce que** la première unité de sciage (32) et/ou la deuxième unité de sciage (36) est ou sont une unité de sciage à ruban, et en particulier que l'unité de sciage à ruban comprend un cadre de sciage (66, 86), et en particulier que l'unité de sciage à ruban comprend un système de guidage de ruban de scie (70, 90).

13. Dispositif de sciage selon la revendication 12, **caractérisé en ce que** le système de guidage de ruban de scie (70, 90) d'une unité de sciage (32, 36) s'étend dans un plan (72, 92), qui s'étend de manière angulaire par rapport au plan de sciage (76, 96) associé à ladite unité de sciage (32, 36), et en particulier qu'un système de guidage de ruban de scie (70) de la première unité de sciage (32) et un système de guidage de ruban de scie (90) de la deuxième unité de sciage (36) sont disposés sur des côtés opposés les uns aux autres des unités de sciage (32, 36).

14. Procédé servant à usiner par sciage une pièce (160), comprenant les étapes suivantes :
- une pièce (160) est positionnée par rapport à un dispositif de sciage (10) en ce qu'elle est déplacée dans une direction d'avancement (18) le long d'un axe d'avancement (16) du dispositif de sciage (10) de sorte que la pièce (160) traverse un premier plan de sciage (76) s'étendant de manière transversale par rapport à l'axe d'avancement (16) et un deuxième plan de sciage (96) s'étendant de manière transversale par rapport à l'axe d'avancement (16) ;
- la première unité de sciage (32) et/ou la deuxième unité de sciage (36) sont déplacées dans une direction parallèle par rapport à l'axe d'avancement (16) avant de transférer au moins une des unités de sciage (32, 36) dans leur position de repos depuis leur position de travail, et
- la pièce (160) est divisée en trois sections de pièce (164, 166, 168), en ce qu'une première unité de sciage (32) associée au premier plan de sciage (76) et une deuxième unité de sciage (36) associée au deuxième plan de sciage (96) sont transférées respectivement depuis une position de repos, dans laquelle les unités de sciage (32, 36) sont désengagées de la pièce (160), dans une position de travail, dans laquelle les unités de sciage (32, 36) sont en prise avec la pièce (160) ;
**caractérisé en ce que**
- au moins deux des trois sections de pièce (164, 166, 168) sont déplacées indépendamment les unes des autres le long de l'axe d'avancement (16).

15. Procédé selon la revendication 14, **caractérisé en ce qu'**aux fins du positionnement de la pièce (160) par rapport au dispositif de sciage (10), la pièce (160) est déplacée d'une distance deux fois égale à la distance (150) entre le premier plan de sciage (76) et le deuxième plan de sciage (96) le long de l'axe d'avancement (16), et en particulier qu'une première section de pièce (164) disposée, vue dans la direction d'avancement (18), devant le premier plan de sciage (76) est déplacée dans une direction opposée par rapport à la direction d'avancement (18) d'une première valeur de course de retour (170), et en particulier que la première unité de sciage (32) est déplacée dans une direction opposée à la direction d'avancement (18) d'une deuxième valeur de course de retour (172), qui est plus petite que la première valeur de course de retour (170), et en particulier qu'une deuxième section de pièce (166) disposée entre les plans de sciage (76, 96) est déplacée dans une direction opposée à la direction d'avancement (18) d'une troisième valeur de course de retour (174), qui est plus petite que la deuxième valeur de course de retour (172), et en particulier qu'une troisième section de pièce (168) disposée, vue dans la direction d'avancement (18), derrière le deuxième plan de sciage (96), est déplacée dans la direction d'avancement (18) d'une valeur de course vers l'avant (176), et en particulier que la deuxième unité de sciage (36) est déplacée dans la direction d'avancement (18) d'une deuxième valeur de course vers l'avant, qui est plus petite que la première valeur de course vers l'avant, de laquelle la troisième section de pièce est déplacée, et en particulier qu'une deuxième section de pièce (166) disposée entre les plans de sciage (76, 96) est déplacée dans la direction d'avancement (18) d'une troisième valeur de course vers l'avant, qui est plus petite que la deuxième valeur de course vers l'avant, et en particulier qu'une première section de pièce (164) disposée, vue dans la direction d'avancement (18), devant le premier plan de sciage (76) est déplacée dans une direction opposée à la direction d'avancement (18) d'une valeur de course de retour, et en particulier que les sections de pièce (164, 166, 168) sont déplacées immédiatement après dans la direction d'avancement (18) lors d'un transfert de la première unité de sciage (32) et de la deuxième unité de sciage (36) dans leurs positions de repos **en ce qu'**une première section de pièce (164) disposée, vue dans la direction d'avancement (18), avant le premier plan de sciage (76) est déplacée dans la direction d'avancement (18) et entraîne directement une deuxième section de pièce (166) disposée entre les plans de sciage (76, 96) et entraîne, au moyen de la deuxième section de pièce (166), une troisième section de pièce (168) disposée, vue dans la direction d'avancement (18), derrière le deuxième plan de sciage (96).
